(19)

**Europäisches Patentamt**
**European Patent Office**
**Office européen des brevets**

(11)   **EP 4 716 265 A1**

(12)   **EUROPEAN PATENT APPLICATION**
published in accordance with Art. 153(4) EPC

(43) Date of publication:
**25.03.2026   Bulletin 2026/13**

(21) Application number: **23941103.6**

(22) Date of filing: **16.06.2023**

(51) International Patent Classification (IPC):
**H04W 12/03** (2021.01)

(52) Cooperative Patent Classification (CPC):
**H04W 12/03**

(86) International application number:
**PCT/CN2023/100808**

(87) International publication number:
**WO 2024/254870 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• LIU, Peng
  **Shenzhen, Guangdong 518129 (CN)**
• SUN, Li
  **Shenzhen, Guangdong 518129 (CN)**
• WANG, Wenhui
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54)   **COMMUNICATION METHOD AND APPARATUS**

(57)   This application discloses a communication method and apparatus. The method includes: A first apparatus performs security processing on a first message based on a first random seed, to obtain a second message. After obtaining a third message based on the second message, the first apparatus sends the third message to a second apparatus. If the first apparatus receives feedback information from the second apparatus, the first apparatus updates the first random seed to a second random seed, where the feedback information indicates that the second apparatus correctly receives the third message. According to the method, the first apparatus updates the first random seed only when the second apparatus correctly receives the third message, thereby preventing errors from spreading on a link between the first apparatus and the second apparatus. This ensures performance of communication between the first apparatus and the second apparatus while blocking non-target receiving nodes from correctly receiving the third message, thus enhancing message security.

FIG. 3

**Description**

TECHNICAL FIELD

This application relates to the field of communication technologies, and in particular, to a communication method and apparatus.

BACKGROUND

Secure transmission is the fundamental assurance for communication. Currently, most secure transmission solutions are key-based, and include symmetric encryption and asymmetric encryption. In symmetric encryption, two communication parties share a key, and use it to encrypt and decrypt messages. In asymmetric encryption, one communication party sends a public key to the other communication party, a transmitter end encrypts a to-be-sent message by using the public key, and a receiver end decrypts a received message by using a private key corresponding to the public key. Regardless of the encryption scheme, the two communication parties need to maintain and manage the keys. Because key maintenance and management require support of complex protocols, vulnerabilities in these protocols may be exploited by non-target receiving nodes, thereby reducing security of messages.

In addition, some messages are transmitted before key agreement, and therefore key-based secure transmission schemes cannot be applied to these messages, leaving these messages less protected.

SUMMARY

This application provides a communication method and apparatus, to improve message security.

According to a first aspect, an embodiment of this application provides a communication method. The method may be performed by a first apparatus. The first apparatus may be an access network device or a terminal device, or may be an apparatus configured in the access network device or the terminal device. This is not limited in this application.

The method includes: A first apparatus performs security processing on a first message based on a first random seed, to obtain a second message. After obtaining a third message based on the second message, the first apparatus sends the third message to a second apparatus. If the first apparatus receives feedback information from the second apparatus, the first apparatus updates the first random seed to a second random seed, where the feedback information indicates that the second apparatus correctly receives the third message.

According to the method, the first apparatus updates the first random seed only when the second apparatus correctly receives the third message, thereby preventing errors from spreading on a link between the first apparatus and the second apparatus. This ensures performance of communication between the first apparatus and the second apparatus while blocking non-target receiving nodes from correctly receiving the third message, thus enhancing message security.

In a possible design, the second random seed is obtained by performing security processing on the first message. According to this design, the second random seed is a result of the security processing. In this way, the first apparatus can quickly obtain the second random seed and update the random seed, thereby improving a message processing speed.

In a possible design, the second random seed may be determined based on the first random seed and the second message, and the second message is obtained based on the first message. According to this design, the updated random seed is related to the message correctly received by the second apparatus. In this way, an error may spread between a plurality of messages on a link between the first apparatus and the non-target receiving node. However, an error does not spread on the link between the first apparatus and the second apparatus. This can improve the message security while the performance of the communication between the first apparatus and the second apparatus is ensured.

In a possible design, if the first apparatus still does not receive the feedback information after sending the third message to the second apparatus for N times, the first apparatus updates the first random seed, where N is a positive integer. According to this design, when a quantity of retransmissions of the first apparatus is greater than or equal to N, if the first apparatus still does not receive the feedback information, the first apparatus may update the first random seed, so that the non-target receiving node can be prevented from obtaining sufficient information copies and deciphering original information corresponding to the third message, thereby improving the message security.

In a possible design, the first apparatus may send, to the second apparatus, information for determining an updated first random seed. According to this design, the second apparatus may update the first random seed based on first information from the first apparatus, so that inverse security processing can be performed on the message from the first apparatus based on the first random seed, thereby improving the message security without affecting the performance of the communication between the first apparatus and the second apparatus.

In a possible design, the first message includes a plurality of code blocks, and the first apparatus may perform, based on the first random seed, security processing on the plurality of code blocks that are connected in series. According to this design, channel noise entropy can be accumulated between the plurality of code blocks. When an error occurs on a code block, the error spreads between the plurality of code blocks, so that decoding performance of the non-target receiving node is deteriorated, and the message security is improved.

According to a second aspect, an embodiment of this application provides a communication method. The method may be performed by a second apparatus. The second apparatus may be an access network device or a terminal device, or may be an apparatus configured in the access network device or the terminal device. This is not limited in this application.

The method includes: A second apparatus receives a third message from a first apparatus; and after obtaining a second message based on the third message, the second apparatus performs inverse security processing on the second message based on a first random seed, to obtain a first message. When the second apparatus correctly receives the third message, the second apparatus may update the first random seed to a second random seed.

According to the method, the second apparatus updates the first random seed only when the second apparatus correctly receives the third message, thereby preventing errors from spreading on a link between the first apparatus and the second apparatus. This ensures performance of communication between the first apparatus and the second apparatus while blocking non-target receiving nodes from correctly receiving the third message, thus enhancing message security.

In a possible design, the second apparatus may send feedback information to the first apparatus, where the feedback information indicates that the second apparatus correctly receives the third message. According to this design, the first apparatus may learn that the second apparatus correctly receives the third message, to update the first random seed in time based on the feedback information.

In a possible design, the second random seed is obtained by performing inverse security processing on the second message. According to this design, the second random seed is a result of the inverse security processing. In this way, the second apparatus can quickly obtain the second random seed and update the random seed, thereby improving a message processing speed.

In a possible design, the second random seed is determined based on the first random seed and the first message, and the first message is obtained based on the second message. According to this design, the updated random seed is related to the message correctly received by the second apparatus. In this way, an error may spread between a plurality of messages on a link between the first apparatus and the non-target receiving node. However, an error does not spread on the link between the first apparatus and the second apparatus. This can improve the message security while the performance of the communication between the first apparatus and the second apparatus is ensured.

In a possible design, the second apparatus may receive, from the first apparatus, information for determining an updated first random seed. According to this design, the second apparatus may update the first random seed based on first information from the first apparatus, so that inverse security processing can be performed on the message from the first apparatus based on the first random seed, thereby improving the message security without affecting the performance of the communication between the first apparatus and the second apparatus.

In a possible design, the second message includes M code blocks, where M is an integer greater than 1. The second apparatus may perform, based on the first random seed, inverse security processing on the M code blocks that are connected in series. According to this design, channel noise entropy can be accumulated between the plurality of code blocks. When an error occurs on a code block, the error spreads between the plurality of code blocks, so that decoding performance of the non-target receiving node is deteriorated, and the message security is improved.

According to a third aspect, an embodiment of this application provides a communication apparatus, including units configured to perform steps according to any one of the foregoing aspects.

According to a fourth aspect, an embodiment of this application provides a communication apparatus, including a processor. The processor is configured to perform the methods according to the foregoing aspects.

Optionally, the apparatus may further include a memory, configured to store instructions and data. The memory is coupled to the processor. When executing the instructions stored in the memory, the processor may implement the methods according to the foregoing aspects.

According to a fifth aspect, an embodiment of this application provides a communication system, including a first apparatus configured to perform the method according to the first aspect, and a second apparatus configured to perform the method according to the second aspect.

According to a sixth aspect, an embodiment of this application further provides a computer program product including computer-executable instructions. When the computer program product is run, a part of or all steps of the method according to any one of the foregoing aspects are performed.

According to a seventh aspect, an embodiment of this application further provides a computer-readable storage medium. The computer-readable storage medium stores a computer program. When the computer program is executed by a computer, the computer is enabled to perform the method according to any one of the foregoing aspects.

According to an eighth aspect, an embodiment of this application further provides a chip. The chip is configured to read a computer program stored in a memory, to perform the method according to any one of the foregoing aspects.

According to a ninth aspect, an embodiment of this application further provides a chip system. The chip system includes a processor, configured to support a computer apparatus in implementing the method according to any one of the foregoing aspects. In a possible design, the chip system further includes a memory, and the memory is configured to store a program and data that are necessary for the computer apparatus. The chip system may include a chip, or may include the chip and another discrete component.

For technical effect that can be achieved in any one of the third aspect to the ninth aspect, refer to descriptions of technical effect that can be achieved in any one of the possible designs in the first aspect or the second aspect. Repeated parts are not described.

BRIEF DESCRIPTION OF DRAWINGS

FIG. 1 is a diagram of an architecture of a communication system according to an embodiment of this application;
FIG. 2 is a diagram of a keyless secure transmission architecture according to an embodiment of this application;
FIG. 3 is a flowchart of a communication method according to an embodiment of this application;
FIG. 4 is a diagram of performing security processing on a first message by a randomness extractor according to an embodiment of this application;
FIG. 5 is a diagram 1 of updating a first random seed according to an embodiment of this application;
FIG. 6 is a diagram 2 of updating a first random seed according to an embodiment of this application;
FIG. 7 is a diagram of an application scenario according to an embodiment of this application;
FIG. 8 is a diagram of a structure of a communication apparatus according to an embodiment of this application; and
FIG. 9 is a diagram of a structure of another communication apparatus according to an embodiment of this application.

DESCRIPTION OF EMBODIMENTS

Technical solutions provided in embodiments of this application may be applied to various communication systems, for example, a global system for mobile communications (Global System for Mobile Communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system or new radio (new radio, NR), a wireless local area network (wireless local area network, WLAN) system, a wireless fidelity (wireless fidelity, Wi-Fi) system, a 6th generation (6th Generation, 6G) communication system, and a future communication system. The 5G mobile communication system may be non-standalone (non-standalone, NSA) networking or standalone (standalone, SA) networking.

The technical solutions provided in this application may be further applied to machine type communication (machine type communication, MTC), a long term evolution technology for machine-to-machine communication (long term evolution-machine, LTE-M), a device-to-device (device-to device, D2D) network, a machine-to-machine (machine-to-machine, M2M) network, an internet of things (internet of things, IoT) network, or the like. The IoT network may include, for example, internet of vehicles. Communication manners in internet of vehicles system are collectively referred to as vehicle to X (vehicle to X, V2X, where X represents anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

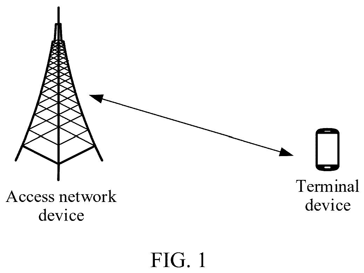

FIG. 1 is a diagram of an architecture of a communication system to which an embodiment of this application is applicable. As shown in FIG. 1, the communication system may include a terminal device (terminal device) and an access network device.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user), for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in internet of vehicles, a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. For example, the wireless terminal in internet of vehicles may be a vehicle-mounted device, an entire vehicle device, a vehicle-mounted module, or a vehicle. The wireless terminal in industrial control may be a camera, a robot, or the like. The wireless terminal in smart home may be a television, an air conditioner, a robotic vacuum cleaner, a speaker, a set-top box, or the like.

The access network device may be a device in a wireless network, for example, includes a radio access network (radio access network, RAN) node or a radio access network device that connects a terminal device to the wireless network. For example, the access network device is a next generation base station (gNodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and integrated access and backhaul (integrated access and backhaul, IAB) in 5G. In some implementations, the access network device may alternatively be an access network device in a future communication system (for example, a 6G communication system).

In a network structure, the access network device may alternatively be a central unit (central unit, CU) or a distributed unit (distributed unit, DU), or the access network device may include a CU and a DU. The CU and the DU are separately disposed, or may be included in a same network element, for example, a BBU. It may be understood that the access network device is divided into the CU and the DU from the perspective of logical functions. The CU is connected to the DU through an F1 interface. On behalf of a gNB, the CU may be connected to a core network through an NG interface. The CU and the DU may be physically separated, or may be deployed together. This is not specifically limited in embodiments of this application. One CU may be connected to one DU, or a plurality of DUs may share one CU, so that costs can be reduced, and network extension can be easily performed. The CU and the DU may be split based on a protocol stack. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and a remaining radio link control (radio link control, RLC) layer, media access control (media access control, MAC) layer, physical layer (PHY), and the like are deployed on the DU. Embodiments of this application are not completely limited to the foregoing protocol stack splitting manner, and there may be another splitting manner.

In addition, the access network device may alternatively be a radio unit (radio unit, RU) or the like. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU, the DU, or the RU may also have different names, but a person skilled in the art may understand meanings of the names. For example, in an open radio access network (open radio access network, O-RAN) system, a CU may be referred to as an O-CU (open CU), a DU may be referred to as an O-DU (open DU), and an RU may be referred to as an O-RU (open RU).

In embodiments of this application, a communication apparatus configured to implement functions of the access network device or functions of the terminal device may be an access network device or a terminal device, or may be an apparatus that can support the access network device or the terminal device in implementing the functions, for example, a chip system, and the apparatus may be installed in the access network device or the terminal device.

It should be understood that FIG. 1 is merely a simplified diagram of an example for ease of understanding. The communication system may further include another access network device and/or another terminal device not shown in FIG. 1.

It should be further understood that the communication system shown in FIG. 1 is merely an example of an application scenario of embodiments of this application. This application may be further applicable to communication between any two devices, for example, applicable to communication between terminal devices, or applicable to communication between access network devices.

The following describes terms in this application.

1. Keyless secure transmission architecture

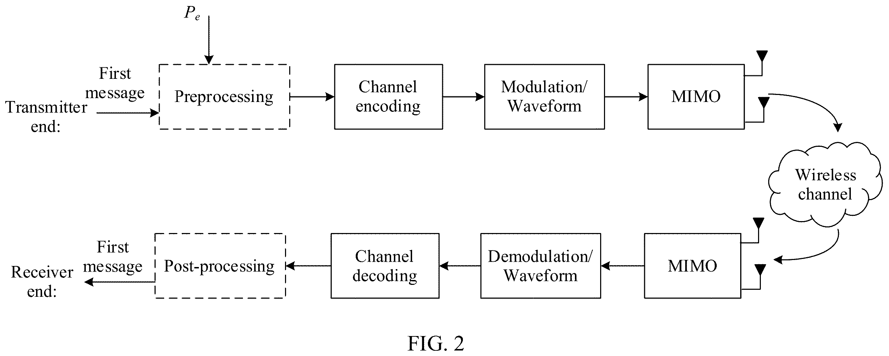

FIG. 2 is a diagram of data transmission in a keyless secure transmission architecture. As shown in FIG. 2, after being preprocessed, a to-be-sent first message sequentially enters a channel encoding procedure, a modulation/waveform procedure, and a multiple-input multiple-output (multiple-input multiple-output, MIMO) procedure, and is sent by a transmitter end to a receiver end over a wireless channel. After the message received by the receiver end sequentially undergoes a MIMO procedure, a demodulation/waveform procedure, and a channel decoding procedure, the first message may be obtained through post-processing.

The post-processing is inverse processing of preprocessing. Preprocessing and post-processing may be performed by a security module. At the transmitter end, the security module is configured to perform security processing on the input message. At the receiver end, the security module is configured to perform inverse security processing on the input message. Optionally, the security module may be a randomness extractor, configured to perform randomness extraction processing on the input message. The randomness extractor may be a hardware device, or may be implemented by software.

2. Random seed, also referred to as a random bit, a random bit stream, random entropy, status information, or the like, may be used to perform security processing on a message input to the security module, for example, used to perform encryption or integrity protection on the message input to the security module. Optionally, the random seed may be directly used to perform security processing on the message input to the security module, or may be used to generate a key by using an algorithm, where the key is used to perform security processing on the message input to the security module.

3. Code block, also referred to as a message group, is a part of a message. One message may include one or more code blocks. The code block may include, for example, a source message group and an encoded code block group.

4. In this application, "when...", "if...", and "if..." may indicate a same meaning, and may be replaced with each other.

Currently, a working principle of the security module includes: performing security processing on a plurality of messages based on random seeds. A random seed corresponding to a message whose sequence number ranks behind is obtained based on a message whose sequence number ranks ahead. In this way, channel noise entropy of a preceding message may be accumulated between the plurality of messages, so that errors can spread between different messages, thereby deteriorating decoding performance of a non-target receiving node.

However, how to update a parameter of the security module is currently discussed. When a receiver end fails to receive a message whose sequence number ranks ahead, if a transmitter end updates a parameter random seed based on the message whose sequence number ranks ahead, the receiver end may not obtain a correct message whose sequence number ranks behind. As a result, communication performance is affected. How to improve message security without affecting the communication performance needs to be further studied.

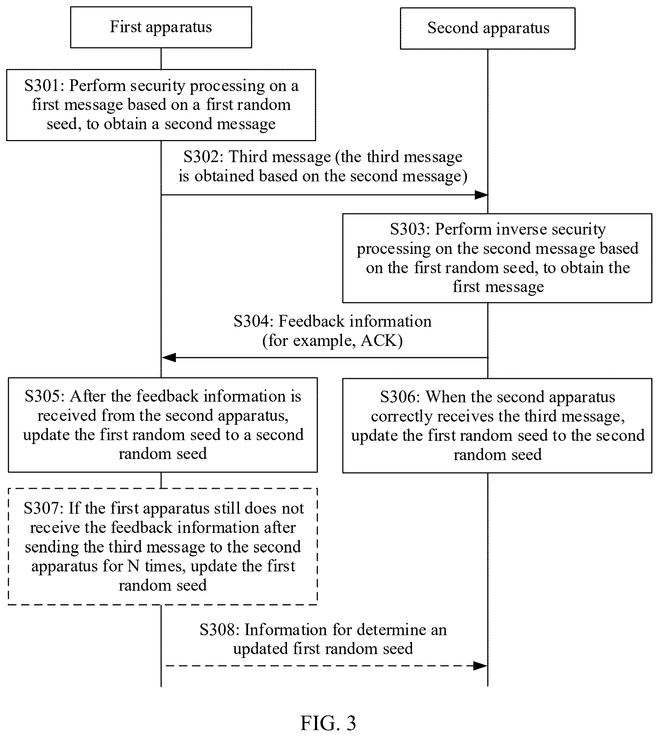

An embodiment of this application provides a communication method. The method may be applied to the communication system shown in FIG. 1. Refer to a flowchart shown in FIG. 3. The following specifically describes a procedure of the method by using an example in which a transmitter end is a first apparatus and a receiver end is a second apparatus.

S301: The first apparatus performs security processing on a first message based on a first random seed, to obtain a second message.

The first apparatus may be an access network device or a terminal device, may be an apparatus (for example, a chip system or a module) that is in the access network device and that is configured to implement a function of the access network device, or may be an apparatus (for example, a chip system or a module) that is in the terminal device and that is configured to implement a function of the terminal device.

Optionally, the security processing is implemented by using a first security module. In this case, the first apparatus may input the first random seed and the first message to the first security module to obtain the second message. The first security module is configured to perform security processing on the first message based on the first random seed. For example, the first security module is a randomness extractor, and the security processing is randomness extraction processing.

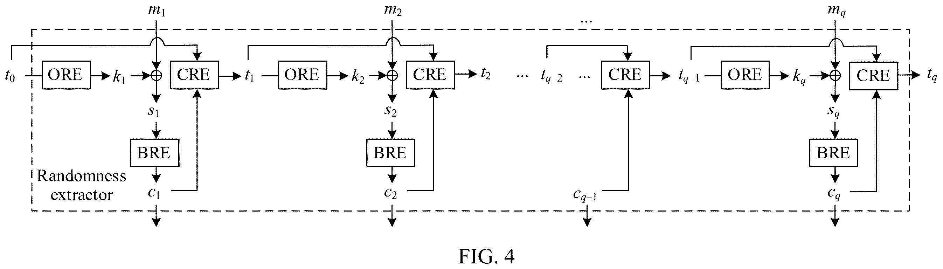

FIG. 4 shows a possible manner of S301 by using an example in which the first security module is a randomness extractor. As shown in FIG. 4, the randomness extractor includes a bidirectional randomness extractor (bidirectional randomness extractor, BRE), a compressive randomness extractor (compressive randomness extractor, CRE), and a one-way randomness extractor (one-way randomness extractor, ORE). The first message includes q code blocks, which are respectively indicated by $m_1$, $m_2$, m, and $m_q$, where q is a positive integer, and the first random seed is $t_0$. For the code block $m_1$, the randomness extractor may process the code block $m_1$ based on the first random seed $t_0$, to obtain a random seed $t_1$ and a code block $shc_1$. The random seed $t_1$ may be obtained based on the code block $c_1$ and the first random seed $t_0$, or may be obtained based on the code block $m_1$ and the first random seed $t_0$. For the code block $m_p$, p is greater than or equal to 2 and less than or equal to q, and the randomness extractor may process the code block $m_p$ based on a random seed $t_{p-1}$, to obtain a random seed $t_p$ and a code block $c_p$. The random seed $t_p$ may be obtained based on the code block $c_p$ and the random seed $t_{p-1}$, or may be obtained based on the code block $m_p$ and the random seed $t_{p-1}$. In this way, the second message output by the first randomness extractor may include q code blocks, which are respectively indicated by $c_1$, $c_2$, c, and $c_q$.

In some possible manners, the first message includes a plurality of code blocks. The first apparatus may perform, based on the first random seed, security processing on the plurality of code blocks that are connected in series, to obtain the second message. For example, as shown in FIG. 4, when q is greater than or equal to 2, the code blocks $m_1$, $m_2$, m, and $m_q$ that are connected in series are input to the randomness extractor, and the randomness extractor may sequentially process $m_1$, $m_2$, m, and $m_q$. In this manner, channel noise entropy can be accumulated between the plurality of code blocks. When an error occurs on a code block, the error spreads between the plurality of code blocks, so that decoding performance of a non-target receiving node is deteriorated, and message security is improved.

Optionally, before performing security processing on the first message, the first apparatus may separately perform cyclic redundancy check (cyclic redundancy check, CRC) on the code blocks in the first message. An example in which the first message includes the code blocks $m_1$, $m_2$, m, and $m_q$ is still used. The first apparatus may perform CRC check on the code block $m_j$ in the first message, to obtain $x_{j=}m_j\|crc(m_j)$. Herein, j ranges from 1 to q, "$\|$" indicates cascading, and $crc(m_j)$ indicates that a CRC operation is performed on the code block $m_j$, to obtain a parity bit. Then, the first apparatus may perform, based on the first random seed, security processing on a message including code blocks $x_1$, $x_2$, x, and $x_q$. For specific content, refer to descriptions in which the first apparatus performs, based on the first random seed, security processing on the first message including the code blocks $m_1$, $m_2$, m, and $m_q$. Details are not described herein again.

S302: The first apparatus sends a third message to the second apparatus. Correspondingly, the second apparatus receives the third message from the first apparatus.

The second apparatus may be an access network device or a terminal device, may be an apparatus (for example, a chip system or a module) that is in the access network device and that is configured to implement a function of the access network device, or may be an apparatus (for example, a chip system or a module) that is in the terminal device and that is configured to implement a function of the terminal device.

The third message is obtained based on the second message. For example, the third message may be a message obtained by performing one or more of a channel encoding procedure, a modulation/waveform procedure, and a MIMO procedure on the second message. When the second message includes a plurality of code blocks, the third message may be a message obtained by separately performing the one or more of the channel encoding procedure, the modulation/waveform procedure, and the MIMO procedure on the plurality of code blocks included in the second message. The first apparatus may simultaneously and separately perform the one or more of the channel encoding procedure, the modulation/waveform procedure, and the MIMO procedure on the plurality of code blocks included in the second message, or may separately perform, at different moments, the one or more of the channel encoding procedure, the modulation/waveform procedure, and the MIMO procedure on different code blocks included in the second message. This is not limited in this application.

S303: The second apparatus performs inverse security processing on the second message based on the first random seed, to obtain the first message.

The second message is obtained based on the third message. For example, the second message may be a message obtained by performing one or more of a MIMO procedure, a demodulation/waveform procedure, and a channel decoding procedure on the third message. When the third message includes a plurality of code blocks, the second message may be a message obtained by separately performing the one or more of the MIMO procedure, the demodulation/waveform procedure, and the channel decoding procedure on the plurality of code blocks included in the third message. The second apparatus may simultaneously and separately perform the one or more of the MIMO procedure, the demodulation/waveform procedure, and the channel decoding procedure on the plurality of code blocks included in the third message, or may separately perform, at different moments, the one or more of the MIMO procedure, the demodulation/waveform procedure, and the channel decoding procedure on different code blocks included in the third message. This is not limited in this application.

Optionally, the inverse security processing is implemented by using a second security module. In this case, the second apparatus may input the first random seed and the second message to the second security module to obtain the first message. The second security module is configured to perform inverse security processing on the second message based on the first random seed. For example, the second security module is a randomness extractor, and the inverse security processing is inverse randomness extraction processing.

In this application, the inverse security processing is inverse processing of the security processing. Therefore, for content of performing inverse security processing on the second message, refer to the description of "performing security processing on the first message" in S301. Details are not described herein again.

In some possible manners, the second message includes M code blocks, where M is an integer greater than 1. The second apparatus performs, based on the first random seed, inverse security processing on the M code blocks that are connected in series, to obtain the first message. For example, the M code blocks that are connected in series may be input to the second security module, and the second security module may sequentially perform inverse security processing on the M code blocks. In this manner, channel noise entropy can be accumulated between the plurality of code blocks. When an error occurs on a code block, the error spreads between the plurality of code blocks, so that the decoding performance of the non-target receiving node is deteriorated, and the message security is improved.

S304: When the second apparatus correctly receives the third message, the second apparatus sends feedback information to the first apparatus. Correspondingly, the first apparatus receives the feedback information from the second apparatus. The feedback information indicates that the second apparatus correctly receives the third message.

In this application, the second apparatus may perform CRC check on the first message. If check on all the code blocks in the first message succeeds, the second apparatus may determine that the third message is correctly received. In this case, the second apparatus may send the feedback information to the first apparatus. For example, the feedback information is an acknowledgment (acknowledgment, ACK).

S305: After receiving the feedback information from the second apparatus, the first apparatus updates the first random seed to a second random seed.

In this way, the first apparatus updates the first random seed only when the second apparatus correctly receives the third message, thereby preventing errors from spreading on a link between the first apparatus and the second apparatus. This prevents the non-target receiving node from correctly receiving the third message and improves the message security while performance of communication between the first apparatus and the second apparatus is ensured.

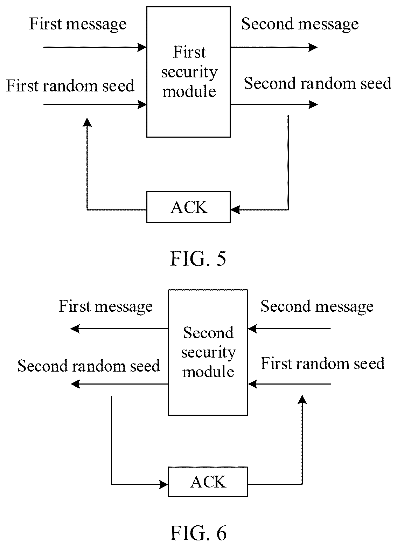

In some possible manners, the second random seed is obtained by performing security processing on the first message. For example, as shown in FIG. 5, the second random seed may be a random seed that is output after security processing is performed on the first message by using the first security module. For example, the first security module is the randomness extractor shown in FIG. 4, and the second random seed may be a random seed $t_q$. In this manner, the second random seed is a result of the security processing. In this way, the first apparatus can quickly obtain the second random seed and update the random seed, thereby improving a message processing speed.

Optionally, the second random seed is determined based on the first random seed and the second message. Because the second message is obtained based on the first message, the second random seed may also be considered as being determined based on the first random seed and the first message. For example, the second random seed is a first function of the first random seed and the second message, or a first function of the first random seed and the first message. The first function may be implemented in a plurality of manners. The following uses an example in which the first function is a first hash (HASH) function for description. For example, the first function may be expressed as:

$$\mathrm{Seed_{out}} = \mathrm{HASH}(\mathrm{Seed_{in}},\ \mathrm{M_{out}}),\ \text{namely,}\ \mathrm{Seed_{out}} = \mathrm{HASH}(\mathrm{Seed_{in}},\ \mathrm{EXT}(\mathrm{M_{in}}, \mathrm{Seed_{in}}))\ (1)$$

Herein, HASH is a hash operation, EXT is a randomness extraction operation, $\mathrm{Seed_{out}}$ is the second random seed, $\mathrm{Seed_{in}}$ is the first random seed, $\mathrm{M_{in}}$ may be the first message, and $\mathrm{M_{out}}$ may be the second message.

Table 1 shows an example of updating the first random seed. In this example, the second apparatus can always correctly receive the message from the first apparatus, and the first random seed is always updated.

Table 1

| $M_{in}$ | $Seed_{in}$ | $M_{out}$ |
|---|---|---|
| $M_0$ | $S_0$ | $EXT(M_0,S_0)$ |
| $M_1$ | $S_1 = HASH(S_0,EXT(M_0,S_0))$ | $EXT(M_1,S_1)$ |
| ... | ... | ... |
| $M_i$ | $S_i = HASH(S_{i-1},EXT(M_{i-1},S_{i-1}))$ | $EXT(M_i,S_i)$ |

In this manner, the updated random seed is related to the message correctly received by the second apparatus. In this way, an error may spread between a plurality of messages on a link between the first apparatus and the non-target receiving node. Specifically, when an error occurs on a message, an error also occurs on a subsequent message. If the non-target receiving node fails to correctly receive a message, the non-target receiving node cannot correctly receive a subsequent message. However, an error does not spread on the link between the first apparatus and the second apparatus. This can improve the message security while the performance of the communication between the first apparatus and the second apparatus is ensured.

Optionally, if the first apparatus does not receive, from the second apparatus, the feedback information indicating that the second apparatus correctly receives the third message, the first apparatus may not update the first random seed, and perform security processing on a retransmitted message of the first message or another message sent by the first apparatus to the second apparatus based on the first random seed. For example, the first message is $M_i$, where i is a positive integer. If the first apparatus does not receive, from the second apparatus, feedback information indicating that the second apparatus correctly receives a third message corresponding to $M_i$, the first apparatus may retransmit the first message. In this case, $M_{i+1}$ is a retransmitted message of $M_i$, and a first random seed $S_{i+1}$ corresponding to $M_{i+1}$ is the same as a first random seed $S_i$ corresponding to $M_i$.

S306: When the second apparatus correctly receives the third message, the second apparatus updates the first random seed to the second random seed.

In this way, the second apparatus updates the first random seed only when the second apparatus correctly receives the third message, thereby preventing errors from spreading on the link between the first apparatus and the second apparatus. This prevents the non-target receiving node from correctly receiving the third message and improves the message security while the performance of the communication between the first apparatus and the second apparatus is ensured.

In some possible manners, the second random seed is obtained by performing inverse security processing on the second message. For example, as shown in FIG. 6, the second random seed may be a random seed that is output after inverse security processing is performed on the second message by using the second security module. In this manner, the second random seed is a result of the inverse security processing. In this way, the second apparatus can quickly obtain the second random seed and update the random seed, thereby improving the message processing speed.

Optionally, the second random seed is determined based on the first random seed and the first message. Because the first message is obtained based on the second message, the second random seed may also be considered as being determined based on the first random seed and the second message.

For example, the second random seed is a second function of the first random seed and the first message, or a second function of the first random seed and the second message. The second function may be implemented in a plurality of manners. The following uses an example in which the second function is a second hash function for description. For example, the second function may be expressed as:

$$\text{Seed}_{out} = \text{HASH}'(\text{Seed}_{in}, \ M_{out}');$$

$$\text{namely}, \ \text{Seed}_{out} = \text{HASH}'(\text{Seed}_{in}, \ \text{EXT}'(M_{in}', \text{Seed}_{in})) \ \ (2)$$

Herein, HASH' is an inverse operation of HASH in Formula (1), EXT' is an inverse operation of EXT in Formula (1), $\text{Seed}_{out}$ is the second random seed, $\text{Seed}_{in}$ is the first random seed, $M_{in}'$ may be the second message, and $M_{out}'$ may be the first message.

In this manner, the updated random seed is related to the message correctly received by the second apparatus. In this way, an error may spread between a plurality of messages on a link between the first apparatus and the non-target receiving node. Specifically, when an error occurs on a message, an error also occurs on a subsequent message. If the non-target receiving node fails to correctly receive a message, the non-target receiving node cannot correctly receive a subsequent message. However, an error does not spread on the link between the first apparatus and the second apparatus. This can improve the message security while the performance of the communication between the first apparatus and the second apparatus is ensured.

A process in which the second apparatus obtains the second random seed is an inverse process of obtaining the second random seed by the first apparatus in S305. For specific content, refer to S305. Details are not described herein again.

It should be understood that, after the first apparatus sends the third message, the first apparatus may not receive the feedback information indicating that the second apparatus correctly receives the third message. To enable the second apparatus to correctly receive the third message, the first apparatus may need to retransmit the third message. When a quantity of retransmissions increases, the non-target receiving node may obtain more information copies, so that original information corresponding to the third message can be deciphered, and the message security is reduced.

To improve the message security, in some possible manners, the method shown in FIG. 3 further includes:

S307: If the first apparatus still does not receive the feedback information after sending the third message to the second apparatus for N times, the first apparatus updates the first random seed. N is a positive integer. N may be preset, or may be determined by the first apparatus or the second apparatus, or may be set by another apparatus for the first apparatus or the second apparatus.

In some examples, each time after the third message is sent, if at least one of the following conditions is satisfied, the first apparatus may determine that the feedback information is not received:

Condition 1: The first apparatus receives indication information from the second apparatus, where the indication information indicates that the second apparatus fails to correctly receive the third message. For example, the indication information may be a negative acknowledgment (non-acknowledgment, NACK). For example, the second apparatus performs CRC check on the message obtained based on the third message. If check on one or more code blocks in the message obtained based on the third message fails, the second apparatus determines that the third message is not correctly received, and sends the indication information to the first apparatus. In this case, the method shown in FIG. 3 may not include S304 to S306, and the message obtained in S303 is not the first message.

Condition 2: Within first duration after the third message is sent, the first apparatus receives neither the feedback information nor indication information. For specific content of the indication information, refer to the condition 1. Details are not described herein again. For example, when the second apparatus does not receive the third message, the second apparatus does not send the feedback information or the indication information to the first apparatus. In this case, the method shown in FIG. 3 may not include S303 to S306. For another example, after receiving the third message, the second apparatus sends the feedback information to the first apparatus, but the first apparatus does not receive the feedback information. In this case, the method shown in FIG. 3 may not include S305. For still another example, after receiving the third message, the second apparatus sends the indication information to the first apparatus, but the first apparatus does not receive the indication information. In this case, the method shown in FIG. 3 may not include S304 to S306, and the message obtained in S303 is not the first message.

Optionally, the first apparatus may initialize the first random seed, to update the first random seed. For example, the first apparatus may randomly generate a random seed, and use the randomly generated seed as the updated first random seed. For another example, the first apparatus may initialize the security module, to initialize the first random seed.

In this manner, when the quantity of retransmissions of the first apparatus is greater than or equal to N, if the first apparatus still does not receive the feedback information, the first apparatus may update the first random seed, so that the non-target receiving node can be prevented from obtaining sufficient information copies and deciphering the original information corresponding to the third message, thereby improving the message security.

When the first apparatus updates the first random seed, to enable the second apparatus to synchronously update the first random seed, the method shown in FIG. 3 may further include:

S308: The first apparatus sends, to the second apparatus, information (briefly referred to as first information below) for determining an updated first random seed. Correspondingly, the second apparatus receives the first information from the first apparatus.

In some possible manners, the first information may directly or indirectly indicate the updated first random seed. For example, the first information includes the updated first random seed in S307. In other words, after the first apparatus updates the first random seed, the first apparatus may directly send the updated first random seed to the second apparatus. For another example, there is a correspondence between the first information and the updated first random seed in S307. In this way, after receiving the first information, the second apparatus may determine the updated first random seed in S307.

In some other possible manners, the first information indicates the second apparatus to update the first random seed in a same manner as the first apparatus. For example, if the first apparatus initializes the first random seed by using a first algorithm, the first information may indicate the first algorithm, and then the second apparatus may initialize the first random seed by using the first algorithm.

According to the method, the second apparatus may update the first random seed based on first information from the first apparatus, so that inverse security processing can be performed on the message from the first apparatus based on the first random seed, thereby improving the message security without affecting the performance of the communication between the first apparatus and the second apparatus.

Optionally, when the first apparatus is an access network device, operations of the first apparatus in S301, S305, and S307 may be performed by a CU, and operations of the first apparatus in S302, S304, and S308 may be performed by a DU; and/or when the second apparatus is an access network device, operations of the second apparatus in S303 and S306 may be performed by a CU, and operations of the second apparatus in S302, S304, and S308 may be performed by a DU.

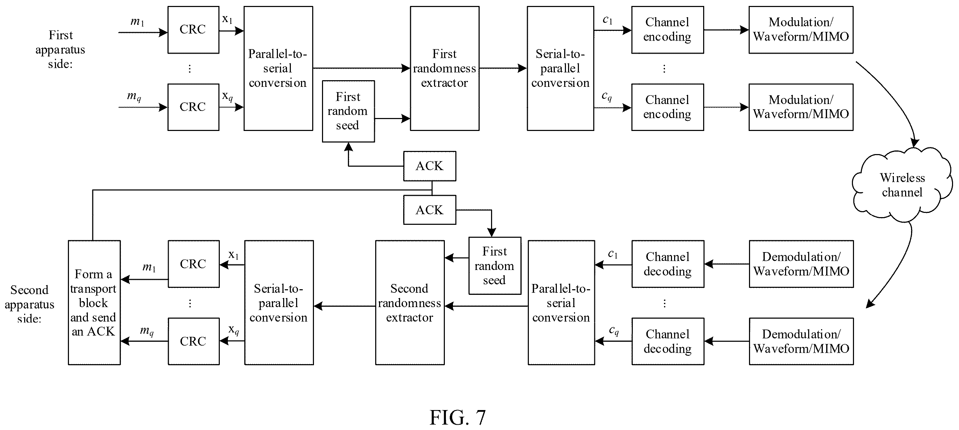

FIG. 7 is a diagram of an application scenario according to this application. With reference to FIG. 7, the following describes application of the method shown in FIG. 3 to the application scenario shown in FIG. 7.

1. First apparatus side

As shown in FIG. 7, a to-be-sent first message includes q code blocks, which are respectively indicated by code blocks $m_1$, $m_2$, m, and $m_q$. The first apparatus may separately perform CRC check on the q code blocks, to obtain a message including code blocks $x_1$, $x_2$, x, and $x_q$. After performing parallel-to-serial conversion on the code blocks $x_1$, $x_2$, x, and $x_q$, the first apparatus inputs, to a first randomness extractor, the code blocks $x_1$, $x_2$, x, and $x_q$ that are connected in series and a first random seed, to obtain a second message including code blocks $c_1$, $c_2$, c, and $c_q$. The first apparatus may perform serial-to-parallel conversion on the second message to obtain the code blocks $c_1$, $c_2$, c, and $c_q$ that are connected in parallel, and separately perform a channel encoding procedure and a modulation/waveform/MIMO procedure on the code blocks $c_1$, $c_2$, c, and $c_q$, to obtain a third message. Then, the first apparatus may send the third message over a wireless channel.

2. Second apparatus side

As shown in FIG. 7, after receiving the third message, the second apparatus separately performs a demodulation/waveform/MIMO procedure and a channel decoding procedure on each code block in the third message, to obtain the second message including the code blocks $c_1$, $c_2$, c, and $c_q$. After performing parallel-to-serial conversion on the code blocks $c_1$, $c_2$, c, and $c_q$, the second apparatus inputs, to a second randomness extractor, the code blocks $c_1$, $c_2$, c, and $c_q$ that are connected in series and the first random seed, to obtain the message including the code blocks $x_1$, $x_2$, x, and $x_q$. The second apparatus performs serial-to-parallel conversion on the message including the code blocks $x_1$, $x_2$, x, and $x_q$, to obtain the message including the code blocks $x_1$, $x_2$, x, and $x_4$ that are connected in parallel. The second apparatus separately performs CRC check on the code blocks $x_1$, $x_2$, x, and $x_q$, to obtain the first message including the code blocks $m_1$, $m_2$, m, and $m_q$. If CRC check on all the code blocks in the first message succeeds, the second apparatus may determine that the third message is correctly received, form a transport block by using the code blocks m , $m_2$, m, and $m_q$, and send, to the first apparatus, feedback information (for example, an ACK) indicating that the second apparatus correctly receives the third message.

If the second apparatus sends the feedback information to the first apparatus, the first apparatus and the second apparatus may update the first random seed. In this way, the first apparatus updates the first random seed only when the second apparatus correctly receives the third message, thereby preventing errors from spreading on a link between the first apparatus and the second apparatus. This ensures performance of communication between the first apparatus and the second apparatus while blocking non-target receiving nodes from correctly receiving the third message, thus enhancing message security.

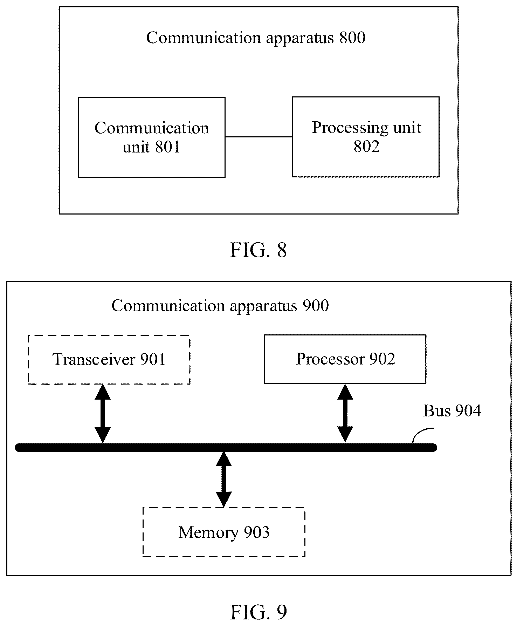

Based on a same technical concept as the method embodiment in FIG. 3, an embodiment of this application provides a communication apparatus shown in FIG. 8, and the communication apparatus may be configured to perform functions of related steps in the foregoing method embodiment. The function may be implemented by hardware, or may be implemented by software or by hardware executing corresponding software. The hardware or the software includes one or more modules corresponding to the foregoing function. A structure of the communication apparatus is shown in FIG. 8, and includes a communication unit 801 and a processing unit 802. The communication apparatus 800 may be used in a terminal device or an access network device, and may implement the communication method provided in the foregoing embodiments and examples of this application. The following describes functions of the units in the communication apparatus 800.

The communication unit 801 is configured to: receive and send information. In some manners, the communication unit 801 may be implemented through a physical interface, a communication module, a communication interface, or an input/output interface. The communication apparatus 800 may be connected to a network cable or a cable by using the communication unit, to establish a physical connection to another device. In some other manners, the communication unit 801 may be implemented by a transceiver, for example, a mobile communication module. The mobile communication module may include at least one antenna, at least one filter, a switch, a power amplifier, a low noise amplifier (low noise amplifier, LNA), and the like.

The processing unit 802 may be configured to support the communication apparatus 800 in performing a processing action in the foregoing method embodiment. The processing unit 802 may be implemented by a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 800 is used in the first apparatus in the embodiment of this application shown in FIG. 3. The following describes specific functions of the processing unit 802 in this implementation.

The processing unit 802 is configured to perform security processing on a first message based on a first random seed, to obtain a second message; send a third message to a second apparatus by using the communication unit 801, where the third message is obtained based on the second message; and after feedback information is received from the second apparatus, update the first random seed to a second random seed, where the feedback information indicates that the second apparatus correctly receives the third message.

In some possible manners, the processing unit 802 is further configured to: if the feedback information is still not received after the communication apparatus sends the third message to the second apparatus for N times, update the first random seed, where N is a positive integer.

Optionally, the processing unit 802 is further configured to send, to the second apparatus, information for determining an updated first random seed.

In some implementations, the first message includes a plurality of code blocks, and the processing unit 802 is specifically configured to perform, based on the first random seed, security processing on the plurality of code blocks that are connected in series.

In another implementation, the communication apparatus 800 is used in the second apparatus in the embodiment of this application shown in FIG. 3. The following describes specific functions of the processing unit 802 in this implementation.

The processing unit 802 is configured to: receive a third message from a first apparatus by using the communication unit 801; perform inverse security processing on a second message based on a first random seed, to obtain a first message, where the second message is obtained based on the third message; and when the communication apparatus correctly receives the third message, update the first random seed to a second random seed.

In some possible manners, the processing unit 802 is further configured to send feedback information to the first apparatus by using the communication unit 801, where the feedback information indicates that the second apparatus correctly receives the third message.

Optionally, the processing unit 802 is further configured to receive, from the first apparatus by using the communication unit 801, information for determining an updated first random seed.

In some implementations, the second message includes M code blocks, M is an integer greater than 1, and the processing unit 802 is specifically configured to perform, based on the first random seed, inverse security processing on the M code blocks that are connected in series.

For specific functions of the processing unit 802, refer to the descriptions in the communication method provided in the foregoing embodiments and examples of this application. Details are not described herein again.

It should be noted that, in the foregoing embodiments of this application, division into the modules is an example, is merely logical function division, and may be other division in an actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium, and includes several instructions for instructing a computer device (which may be a personal computer, a server, or a network device) or a processor (processor) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 9, and the communication apparatus may be configured to perform related steps in the foregoing method embodiment. The communication apparatus may be used in a terminal device or an access network device, may implement the communication method provided in the foregoing embodiments and examples of this application, and has a function of the communication apparatus shown in FIG. 8. As shown in FIG. 9, the communication apparatus 900 includes a processor 902. Optionally, the communication apparatus 900 further includes a transceiver 901 and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of indication, the bus is indicated by only one thick line in FIG. 9, but this does not indicate that there is only one bus or one type of bus.

The transceiver 901 is configured to: receive and send information, to implement communication and interaction with another device. For example, the transceiver 901 may be implemented through a physical interface, a communication module, a communication interface, or an input/output interface.

The processor 902 may be configured to support the communication apparatus 900 in performing a processing action in the foregoing method embodiment. When the communication apparatus 900 is configured to implement the foregoing method embodiment, the processor 902 may be further configured to implement the functions of the processing unit 802. The processor 902 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication apparatus 900 is used in the first apparatus in the embodiment of this application shown in FIG. 3. The following describes specific functions of the processor 902 in this implementation.

The processor 902 is configured to perform security processing on a first message based on a first random seed, to obtain a second message; send a third message to a second apparatus by using the transceiver 901, where the third message is obtained based on the second message; and after feedback information is received from the second apparatus, update the first random seed to a second random seed, where the feedback information indicates that the second apparatus correctly receives the third message.

In another implementation, the communication apparatus 900 is used in the second apparatus in the embodiment of this application shown in FIG. 3. The following describes specific functions of the processor 902 in this implementation.

The processor 902 is configured to: receive a third message from a first apparatus by using the transceiver 901; perform inverse security processing on a second message based on a first random seed, to obtain a first message, where the second message is obtained based on the third message; and when the communication apparatus correctly receives the third message, update the first random seed to a second random seed.

For specific functions of the processor 902, refer to the descriptions in the communication method provided in the foregoing embodiments and examples of this application, and the specific function descriptions of the communication apparatus 800 in the embodiment of this application shown in FIG. 8. Details are not described herein again.

The memory 903 is configured to store program instructions and/or data, and the like. Specifically, the program instructions may include program code, and the program code includes computer operation instructions. The memory 903 may include a RAM, and may further include a non-volatile memory (non-volatile memory), for example, at least one disk memory. The processor 902 executes the program instructions stored in the memory 903, and uses the data stored in the memory 903, to implement the foregoing function, so as to implement the communication method provided in the foregoing embodiment of this application. The memory 903 may be integrated with the processor 902, or may be a memory outside the communication apparatus.

It may be understood that the memory 903 in FIG. 9 in this application may be a volatile memory or a non-volatile memory, or may include a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program product including computer-executable instructions. When the computer program product is run, the method provided in the foregoing embodiments is performed.

Based on the foregoing embodiments, an embodiment of this application further provides a computer-readable storage medium. The computer-readable storage medium stores a computer program. When the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, another optical disc storage, a disk storage medium, another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor, configured to support a computer apparatus in implementing functions related to devices in the foregoing embodiments. In a possible design, the chip system further includes a memory, and the memory is configured to store a program and data that are necessary for the computer apparatus. The chip system may include a chip or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. In text descriptions of this application, a character "/" usually indicates an "or" relationship between the associated objects. "Including at least one of A, B, and C" may indicate: including A; including B; including C; including A and B; including A and C; including B and C; and including A, B, and C.

It may be understood that various numbers in embodiments of this application are merely used for distinguishing for ease of description and are not used to limit the scope of embodiments of this application. Sequence numbers of the foregoing processes do not mean an execution sequence, and the execution sequences of the processes should be determined based on functions and internal logic of the processes.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

   performing security processing on a first message based on a first random seed, to obtain a second message;
   sending a third message to a second apparatus, wherein the third message is obtained based on the second message; and
   after feedback information is received from the second apparatus, updating the first random seed to a second random seed, wherein the feedback information indicates that the second apparatus correctly receives the third message.

2. The method according to claim 1, wherein the second random seed is obtained by performing security processing on the first message.

3. The method according to claim 2, wherein that the second random seed is obtained by performing security processing on the first message comprises:
   the second random seed is determined based on the first random seed and the second message, and the second message is obtained based on the first message.

4. The method according to any one of claims 1 to 3, further comprising:
   if the feedback information is still not received after the third message is sent to the second apparatus for N times, updating the first random seed, wherein N is a positive integer.

5. The method according to claim 4, further comprising:
   sending, to the second apparatus, information for determining an updated first random seed.

6. The method according to any one of claims 1 to 5, wherein the first message comprises a plurality of code blocks, and performing security processing on the first message based on the first random seed comprises:
   performing, based on the first random seed, security processing on the plurality of code blocks that are connected in series.

7. A communication method, comprising:

receiving a third message from a first apparatus;

performing inverse security processing on a second message based on a first random seed, to obtain a first message, wherein the second message is obtained based on the third message; and

when the third message is correctly received, updating the first random seed to a second random seed.

8. The method according to claim 7, further comprising:
sending feedback information to the first apparatus, wherein the feedback information indicates that the third message is correctly received.

9. The method according to claim 7 or 8, wherein the second random seed is obtained by performing inverse security processing on the second message.

10. The method according to claim 9, wherein that the second random seed is obtained by performing inverse security processing on the first message comprises:
the second random seed is determined based on the first random seed and the first message, and the first message is obtained based on the second message.

11. The method according to any one of claims 7 to 10, further comprising:
receiving, from the first apparatus, information for determining an updated first random seed.

12. The method according to any one of claims 7 to 11, wherein the second message comprises M code blocks, M is an integer greater than 1, and performing inverse security processing on the second message based on the first random seed comprises:
performing, based on the first random seed, inverse security processing on the M code blocks that are connected in series.

13. A communication apparatus, comprising:

a communication unit, configured to: receive and send information; and
a processing unit, configured to:

perform security processing on a first message based on a first random seed, to obtain a second message;
send a third message to a second apparatus by using the communication unit, wherein the third message is obtained based on the second message; and
after feedback information is received from the second apparatus by using the communication unit, update the first random seed to a second random seed, wherein the feedback information indicates that the second apparatus correctly receives the third message.

14. The apparatus according to claim 13, wherein the second random seed is obtained by performing security processing on the first message.

15. The apparatus according to claim 14, wherein the second random seed is determined based on the first random seed and the second message, and the second message is obtained based on the first message.

16. The apparatus according to any one of claims 13 to 15, wherein if the feedback information is still not received after the third message is sent to the second apparatus for N times by using the communication unit, the processing unit is further configured to update the first random seed, wherein N is a positive integer.

17. The apparatus according to claim 16, wherein the processing unit is further configured to send, to the second apparatus by using the communication unit, information for determining an updated first random seed.

18. The apparatus according to any one of claims 13 to 17, wherein the processing unit is specifically configured to perform, based on the first random seed, security processing on the plurality of code blocks that are connected in series.

19. A communication apparatus, comprising:

a communication unit, configured to: receive and send information; and

a processing unit, configured to:

receive a third message from a first apparatus by using the communication unit;
perform inverse security processing on a second message based on a first random seed, to obtain a first message, wherein the second message is obtained based on the third message; and
when the third message is correctly received, update the first random seed to a second random seed.

20. The apparatus according to claim 19, wherein the processing unit is further configured to send feedback information to the first apparatus by using the communication unit, wherein the feedback information indicates that the third message is correctly received.

21. The apparatus according to claim 19 or 20, wherein the second random seed is obtained by performing inverse security processing on the second message.

22. The apparatus according to claim 21, wherein the second random seed is determined based on the first random seed and the first message, and the first message is obtained based on the second message.

23. The apparatus according to any one of claims 19 to 22, wherein the processing unit is further configured to receive, from the first apparatus by using the communication unit, information for determining an updated first random seed.

24. The apparatus according to any one of claims 19 to 23, wherein the second message comprises M code blocks, M is an integer greater than 1, and the processing unit is specifically configured to perform, based on the first random seed, inverse security processing on the M code blocks that are connected in series.

25. A communication apparatus, comprising a processor, wherein the processor is configured to perform the method according to any one of claims 1 to 12.

26. A communication system, comprising:

a first apparatus, configured to implement the method according to any one of claims 1 to 6; and
a second apparatus, configured to implement the method according to any one of claims 7 to 12.

27. A computer-readable storage medium, wherein the computer-readable storage medium stores a computer program or instructions, and when the computer program or the instructions are executed by a communication apparatus, the method according to any one of claims 1 to 12 is implemented.

28. A chip, wherein the chip is coupled to a memory, and the chip reads a computer program stored in the memory, to perform the method according to any one of claims 1 to 12.

29. A computer program product, wherein the computer program product comprises computer program code, and when the computer program code is run, the method according to any one of claims 1 to 12 is implemented.

Access network
device

Terminal
device

FIG. 1

FIG. 2

| First apparatus | Second apparatus |

S301: Perform security processing on a first message based on a first random seed, to obtain a second message

S302: Third message (the third message is obtained based on the second message)

S303: Perform inverse security processing on the second message based on the first random seed, to obtain the first message

S304: Feedback information (for example, ACK)

S305: After the feedback information is received from the second apparatus, update the first random seed to a second random seed

S306: When the second apparatus correctly receives the third message, update the first random seed to the second random seed

S307: If the first apparatus still does not receive the feedback information after sending the third message to the second apparatus for N times, update the first random seed

S308: Information for determine an updated first random seed

FIG. 3

FIG. 4

First message       Second message

First random seed    Second random seed

First security module

ACK

FIG. 5

First message       Second message

Second random seed    First random seed

Second security module

ACK

FIG. 6

First
apparatus
side:

$m_1$ → CRC → $x_1$ → Parallel-to-serial conversion

$m_q$ → CRC → $x_q$ → Parallel-to-serial conversion

First random seed → First randomness extractor → Serial-to-parallel conversion → $c_1$ → Channel encoding → Modulation/Waveform/MIMO

$c_q$ → Channel encoding → Modulation/Waveform/MIMO

ACK

ACK

Wireless channel

Second
apparatus
side:

Form a transport block and send an ACK ← $m_1$ ← CRC ← $x_1$ ← Serial-to-parallel conversion

← $m_q$ ← CRC ← $x_q$

Second randomness extractor ← First random seed ← Parallel-to-serial conversion ← $c_1$ ← Channel decoding ← Demodulation/Waveform/MIMO

← $c_q$ ← Channel decoding ← Demodulation/Waveform/MIMO

FIG. 7

Communication apparatus 800

Communication unit 801 —— Processing unit 802

FIG. 8

Communication apparatus 900

Transceiver 901

Processor 902

Bus 904

Memory 903

FIG. 9

## INTERNATIONAL SEARCH REPORT

| International application No. |
| --- |
| **PCT/CN2023/100808** |

| A. | CLASSIFICATION OF SUBJECT MATTER |
| --- | --- |

H04W12/03(2021.01)i

According to International Patent Classification (IPC) or to both national classification and IPC

| B. | FIELDS SEARCHED |
| --- | --- |

Minimum documentation searched (classification system followed by classification symbols)

IPC:H04W H04L H04B

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 安全, 编码, 调制, 解调, 更新, 随机, 种子, 随机熵, 随机比特, 无密钥, MIMO, 模块, 替换, 信道, channel, code, security, symbol, secret, random, seed, module, update

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107181732 A (ZHEJIANG POLICE COLLEGE) 19 September 2017 (2017-09-19) description, paragraphs 5-95 | 1-29 |
| A | CN 112242871 A (NOKIA SHANGHAI BELL CO., LTD. et al.) 19 January 2021 (2021-01-19) entire document | 1-29 |
| A | CN 116249105 A (RESEARCH INSTITUTE OF CHINA MOBILE COMMUNICATIONS CORP. et al.) 09 June 2023 (2023-06-09) entire document | 1-29 |
| A | US 2021037387 A1 (QUALCOMM INC.) 04 February 2021 (2021-02-04) entire document | 1-29 |
| A | US 2022225099 A1 (SAMSUNG ELECTRONICS CO., LTD.) 14 July 2022 (2022-07-14) entire document | 1-29 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 November 2023** | **20 December 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100808**

| Patent document cited in search report | | | Publication date (day/month/year) | Patent family member(s) | | | Publication date (day/month/year) |
|---|---|---|---|---|---|---|---|
| CN | 107181732 | A | 19 September 2017 | None | | | |
| CN | 112242871 | A | 19 January 2021 | None | | | |
| CN | 116249105 | A | 09 June 2023 | None | | | |
| US | 2021037387 | A1 | 04 February 2021 | WO | 2021026548 | A1 | 11 February 2021 |
| | | | | EP | 4008118 | A1 | 08 June 2022 |
| | | | | CN | 114208108 | A | 18 March 2022 |
| | | | | IN | 202247001035 | A | 04 February 2022 |
| US | 2022225099 | A1 | 14 July 2022 | WO | 2022149953 | A1 | 14 July 2022 |
| | | | | EP | 4260588 | A1 | 18 October 2023 |
| | | | | KR | 20220101531 | A | 19 July 2022 |

Form PCT/ISA/210 (patent family annex) (July 2022)